# EUROPÄISCHE PATENTSCHRIFT

(11) **EP 0 296 579 B1**
(45) Veröffentlichungstag und Bekanntmachung des Hinweises auf die Patenterteilung: **02.11.1994**
(21) Anmeldenummer: 88109996.4
(22) Anmeldetag: 23.06.1988
(51) Int. Cl.: C08J 5/18, C08L 101/00, C08L 27/06

(54) **Mattierungsmittel für Folien auf der Basis von Vinylchloridpolymerisaten**
Matting agent for films based on vinyl chloride polymers
Agent de matité pour films à base de polymères de chlorure de vinyle

(30) Priorität: 25.06.1987 DE 3721015
(43) Veröffentlichungstag der Anmeldung: 28.12.1988
(73) Patentinhaber: WACKER-CHEMIE GMBH, D-81737 München (DE)
(72) Erfinder: Spindler, Ernst, Dr. Dipl.-Phys., D-8263 Burghausen (DE); Haller, Ingo, D-8263 Burghausen (DE)

(56) Entgegenhaltungen:
- EP-A- 0 104 433
- EP-A- 0 172 562
- CH-A- 457 822

## Beschreibung

Die vorliegende Erfindung betrifft die Verwendung feinteiliger Homo- und Copolymerisate des Vinylchlorids zur Mattierung von Folien und thermoplastischen Produkten, bei denen ebenfalls während der Verarbeitung eine größere Dehnung des Formkörpers auftritt, wie z. B. Hohlkörper, die durch Extrusion- oder Spritzblasen hergestellt werden, auf der Basis von Vinylchloridpolymerisat.

Kunststoffolien besitzen im allgemeinen glänzende Oberflächen. Die Reduktion des Oberflächenglanzes von Kunststoffolien ist daher bereits Gegenstand mehrerer Publikationen. Oberflächen von Kunststoffolien werden als matt empfunden, wenn auf die Oberfläche auftreffende Lichtstrahlen diffus gestreut werden. Diese diffuse Streuung des Lichts tritt dann auf, wenn die Oberfläche, auf die der Lichtstrahl trifft, mehr oder weniger regelmäßig strukturiert ist. Die mattierende Wirkung von Mattierungsmitteln beruht nun darauf, daß durch deren Zumischung diese Oberflächenstrukturierung bzw. -aufrauhung erreicht wird.

Ein Verfahren zur Herstellung von thermoplastischen Folien mit mattierenden rauhen Oberflächen ist die Kalandrierung mit aufgerauhten Kalanderwalzen. Nachteilig sind hier die hohen Anschaffungskosten und die teure Instandhaltung der aufgerauhten Walzen. Ein weiteres Verfahren zur Oberflächenmattierung durch spezielle Kalandrierverfahren ist in der DE-A-26 29 742 (GB-A-1,581,686) beschrieben. Mittels dieses Verfahrens werden die Folienoberflächen mattiert, indem man die letzten beiden Kalanderwalzen beim Rollknet-Kalandrierverfahren mit unterschiedlicher Geschwindigkeit laufen läßt. Der erreichbare Matteffekt ist jedoch unbefriedigend.

Aus der DE-A-23 59 060 (US-A-4,148,955) sind mattierte Kunststoffolien bekannt, die mit Glaskugeln gefüllt sind. Zur Mattierung werden dabei Glaskugeln in einer Größe von 0,5 bis 50 µm eingesetzt. Nachteilig bei diesem Verfahren ist der unbefriedigende Mattierungseffekt bei rauher Oberflächenbeschaffenheit. In der DE-A-28 44 687 (EP-B-10646) ist die Verwendung von anorganischen Mattierungsmitteln wie Kreide, Talkum, Kaolin, Schwerspat in einer Teilchengröße von 0,5 bis 15 µm beschrieben. Neben der schlechten Mattierungswirkung dieser Beimengungen verschlechtert sich bei deren Zugabe die Verarbeitkeit der Polymerisatmasse.

In der DE-B-27 16 853 wird die Mattierung von Folien dadurch erreicht, daß man dem Vinylchloridmatrixpolymerisat Vinylchloridpolymer hohen Molekulargewichts zumischt. Ein ähnliches Verfahren ist aus der DE-A-34 29 846 bekannt - hier wird zur Mattierung Vinylchloridpolymerisat hohen K-Werts sowie Stärke dem Matrixpolymer zugemischt. Gemäß der DE-A-34 31 201 (EP-A-0172562) können mattierte Kunststoffmassen zur Folienherstellung durch Zumischung von vernetzten bzw. unvernetzten hochmolekularen Vinylchloridpolymerisaten mit einer Korngröße zwischen 10 und 80 µm und mit einer Quecksilberporosität von höchstens 0.2 cm³/g bei Drücken bis 300 bar zum Vinylchloridmatrixpolymer erhalten werden. Nachteilig bei allen drei Verfahren zur Mattierung mittels Zumischung hochmolekularer bzw. vernetzter Polymerisate ist die die Mattierungswirkung bedingende Strukturierung bzw. Aufrauhung der Folienoberfläche.

Aufgabe der vorliegenden Erfindung war es daher, Folien und thermoplastische Produkte wie Hohlkörper, hergestellt durch Extrusion- oder Spritzblasen, auf der Basis von Vinylchloridpolymerisat zu mattieren, ohne dabei eine makroskopische Strukturierung der Oberfläche, d.h. eine rauhe Folienoberfläche zu erhalten.
Überraschenderweise ist dies durch die Verwendung sehr feinteiliger, unporöser, vernetzter und unvernetzter Homo- bzw. Copolymerisate des Vinylchlorids gelungen. Trotz der sehr kleinen Partikelgröße und der daraus resultierenden lediglich "mikroskopischen Strukturierung" der Folienoberfläche wurden mattierte Oberflächen von hoher Gleichmäßigkeit erhalten. Auch die, aufgrund der großen Oberfläche der feinteiligen Partikel zu befürchtende Verschmelzung der Mattierungsmittel bzw. deren Verlaufen im Matrixpolymersat bei der thermoplastischen Verarbeitung ist überraschenderweise nicht aufgetreten.
Gegenstand der Erfindung ist die Verwendung von feinteiligen, unporösen Homo- und Copolymerisaten des Vinylchlorids als Mattierungsmittel für Kunststoffolien und für Hohlkörper aus dem Extrusionsblas- oder Spritzblasverfahren, jeweils auf der Basis von Vinylchloridpolymerisat als Matrixpolymerisat, dadurch gekennzeichnet, daß die mittlere Teilchengröße 1.5 bis weniger als 10 µm beträgt und das Mattierungsmittel eine Porosität von max. 0.2 cm³/g, gemessen als Quecksilberporosität bei Drücken bis 300 bar, einen K-Wert von 70 bis 100 bei unvernetzten und einen Gelgehalt von 1 bis 99 Gew.% bei vernetzten Polymerisaten aufweist, wobei das Mattierungsmittel zu 1 bis 50 Gew.%, bezogen auf das Gesamtgewicht der Polymermasse (Matrixpolymer + Mattierungspolymer), dem Matrixpolymerisat zur thermoplastischen Verarbeitung zugesetzt wird. Die Herstellung der Homo- und Copolymersate des Vinylchlorids kann mittels üblicher Polymerisationsverfahren wie Massepolymerisation, Suspensionspolymerisation, Emulsionspolymerisation und Mikrosuspensionspolymerisation erfolgen. Bevorzugt erfolgt die Herstellung nach dem Mikrosuspensionsverfahren.

Als Dispergierhilfsmittel können dabei Emulgatoren und/oder Schutzkolloide verwendet werden. Bei den Emulgatoren können sowohl ionische wie nichtionische eingesetzt werden. Ionische Emulgatoren sind z. B. Alkylsulfate, Alkylsulfonate, Salze epoxidierter Fett- oder Ölsäuren. Beispiele für nichtionische Emulgatoren sind Teilfettsäureester mehrwertiger Alkohole, Teilfettalkoholether mehrwertiger Alkohole, Polyoxyethylenether von Fettalkoholen bzw. aromatischen Hydroxyverbindungen. Geeignete Schutzkolloide sind z. B. Celluloseether und Polyvinylalkohol in verschiedenen Verseifungsgraden.

Als Comonomere werden ungesättigte mit Vinylchlorid copolymerisierbare Monomere verwendet. Beispiele hierfür sind Ethylen, Propylen; Vinylbromid; Vinylidenchlorid; Vinylester organischer Säuren, insbesondere Vinylacetat; (Meth)acrylsäureester wie Butylacrylat und/oder Methylmethacrylat; ungesättigte Dicarbonsäuren wie Fumarsäure, Maleinsäure; Mono- und Diester der Maleinsäure und Fumarsäure.

Zur Herstellung vernetzter Polymerisate werden als Vernetzer mehrfach ethylenisch ungesättigte Verbindungen wie Diallylphthalat, -maleinat, Triallylisocyanurat, Diallylether, Divinylverbindungen, Di- und Triacryl- oder Methacrylester mehrwertiger Alkohole eingesetzt.

Nach der üblichen Aufarbeitung des polymeren Reaktionsprodukts durch Mahlen bzw. Walzen- und Sprühtrocknung der Reaktionsflotte erhält man das Produkt in hinreichend feinteiliger Form. Der Grobanteil kann gegebenenfalls mittels Sichtung entfernt werden.

Die mittlere Teilchengröße des Mattierungsmittels ist kleiner als 10 µm, vorzugsweise 0,5 bis 8 µm. Der K-Wert der Polymerisate beträgt 70 bis 100, vorzugsweise 75 bis 100. Die Porosität, gemessen als Quecksilberporosität bei Drücken bis 300 bar beträgt höchstens 0,2 cm³/g, die Weichmacheraufnahme nach DIN 53417 maximal 15 %. Der Gelgehalt der vernetzten Polymerisate, d. h. der bei Extraktion mit siedendem THF in einer Soxhlet-Apparatur über 48 h unlösliche Rückstand beträgt vorzugsweise 40 - 90 Gew.%. Das Mattierungsmittel wird zu 1 bis 50 Gew.%, vorzugsweise zu 5 bis 20 Gew.%, bezogen auf das Gesamtgewicht der Poliermasse (Matrixpolymer + Mattierungspolymer), je nach gewünschtem Mattierungsgrad eingesetzt. Die Mischung mit der Matrixpolymermasse kann beispielsweise in einem in der Kunststoffverarbeitung üblichen Schnellmischer erfolgen. Üblicherweise werden zur Folienverarbeitung noch weitere Zusätze wie Stabilisatoren, Gleitmittel, Weichmacher, Antistatika oder Pigmente zugesetzt. Die Herstellung der mattierten Folien erfolgt schließlich über Kalandrierung oder Extrusion des Gemisches.
Die folgenden Beispiele dienen der weiteren Erläuterung der Erfindung:
Zur Folienverarbeitung wurde als Matrixpolymerisat Vinnol^{(R)} H 10/60 verwendet (Vinylchlorid/Vinylacetat-Supensionscopolymerisat mit 10 % Vinylacetatgehalt, K-Wert 60 der Wacker-Chemie GmbH, München). Das Matrixpolymerisat wurde in den Beispielen 1 und 2 zu 95 Gew.-Teilen eingesetzt und mit 5 Gew.-Teilen Mattierungsmittel versetzt. Im Vergleichsbeispiel 1 wurden 100 Gew.-Teile Vinnol^{(R)} H 10/60 eingesetzt. Die Stabilisierung der Mischungen erfolgte mit 2,8 Gew.-Teilen Stabilisator-Gleitmittelgemisch (Zinnstabilisierung). Die Mischungen wurden auf einem Mischwalzwerk bei 165°C vorplastifiziert. Die Ausformung zu Folien erfolgte unter milden Scherbedingungen auf einem Laborkalander und unter scharfen Scherbedingungen auf einem Walzwerk.

Die Mattierungswirkung auf die Folienoberfläche wurde auf Vorder- und Rückseite mit einem Lange-Reflektometer unter den Winkeln 20°, 60° und 85° nach DIN 67530 vermessen.

### Beispiel 1

95 Gew.-Teilen Vinnol^{(R)} H 10/60 wurden mit 2,8 Gew.-Teilen Stabilisator/Gleitmittelgemisch und 5 Gew.-Teilen eines unvernetzten Mikrosuspensions-Polyvinylchlorid-Homopolymerisats mit einem K-Wert von 90 und einem mittleren Teilchendurchmesser von 1,5 µm verarbeitet und vermessen.

### Beispiel 2

95 Gew.-Teilen Vinnol^{(R)} H 10/60 wurden mit 2,8 Gew.-Teilen Stabilisator/Gleitmittelgemisch und 5 Gew.-Teilen eines vernetzten Mikrosuspensions-Polyvinylchlorids mit einem Gelgehalt von 40 %, einem K-Wert von ca. 100 und einem mittleren Teilchendurchmesser von 7 µm verarbeitet und vermessen.

### Vergleichsbeispiel 1

100 Gew.-Teile Vinnol^{(R)} H 10/60 wurden mit 2,8 Gew.-Teilen Stabilisator/Gleitmittelgemisch verarbeitet.

**Tabelle**

| Folie | | Meßwinkel | Reflexionsgrad | | |
|---|---|---|---|---|---|
| | | | a) | b) | c) |
| Kalanderfolie | Vorderseite | 20° | 65,5 | 19,7 | 119,2 |
| | | 60° | 104,3 | 48,7 | 136,1 |
| | | 85° | 92,2 | 76,2 | 103,1 |
| | Rückseite | 20° | 62,2 | 19,2 | 127,1 |
| | | 60° | 101,3 | 51,3 | 138,0 |
| | | 85° | 96,0 | 82,7 | 103,7 |
| Walzfolie | Vorders. | 20° | 50,1 | 27,6 | 48,8 |
| | | 60° | 85,7 | 73,1 | 91,3 |
| | | 85° | 95,1 | 59,6 | 92,2 |
| | Rückseite | 20° | 40,0 | 11,2 | 58,4 |
| | | 60° | 82,0 | 98,6 | 102,3 |
| | | 85° | 95,8 | 55,4 | 98,4 |
| a) = Beispiel 1 b) = Beispiel 2 c) = Vergleichsbeispiel 1 | | | | | |

## Patentansprüche

1. Verwendung von feinteiligen, unporösen Homo- und Copolymerisaten des Vinylchlorids als Mattierungsmittel für Kunststoffolien und für Hohlkörper aus dem Extrusionsblas- oder Spritzblasverfahren, jeweils auf der Basis von Vinylchloridpolymerisat als Matrixpolymerisat, dadurch gekennzeichnet, daß die mittlere Teilchengröße 1.5 bis weniger als 10 µm beträgt und das Mattierungsmittel eine Porosität von max. 0,2 cm³/g, gemessen als Quecksilberporosität bei Drücken bis 300 bar, einen K-Wert von 70 bis 100 bei unvernetzten und einen Gelgehalt von 1 bis 99 Gew.% bei vernetzten Polymerisaten aufweist, wobei das Mattierungsmittel zu 1 bis 50 Gew.%, bezogen auf das Gesamtgewicht der Polymermasse (Matrixpolymer + Mattierungspolymer), dem Matrixpolymerisat zur thermoplastischen Verarbeitung zugesetzt wird.

## Claims

1. Use of finely divided, non-porous homopolymers and copolymers of vinyl chloride, in each case based on a vinyl chloride polymer as matrix polymer, as a dulling agent for plastic sheeting and for hollow articles produced by the extrusion blow moulding process or injection blow moulding process, characterized in that the average particle size is 1.5 to less than 10 µm and the dulling agent has a porosity of not more than 0.2 cm³/g, measured as the mercury porosity at pressures of up to 300 bar, a K value of 70 to 100 in the case of non-crosslinked polymers and a gel content of 1 to 99 % by weight in the case of crosslinked polymers, the dulling agent being added in a quantity of 1 to 50 % by weight, relative to the total weight of the polymer mass (matrix polymer + dulling polymer), to the matrix polymer for thermoplastic processing.

## Revendications

1. Utilisation d'homo- et de copolymères du chlorure de vinyle non poreux comme agents de matage pour des feuilles de matière plastique et pour des corps creux obtenus par le procédé d'extrusion-soufflage ou d'injection-soufflage, à base dans chaque cas d'un polymère du chlorure de vinyle comme polymère de matrice, caractérisés en ce que la taille de particules moyenne est de 1,5 à moins de 10 µm et en ce que l'agent de matage présente une porosité, mesurée au moyen d'un porosimètre à mercure, de 0,2 cm³/g au maximum sous des pressions allant jusqu'à 300 bar, une valeur K de 70 à 100 dans le cas des polymères non réticulés et une teneur en gel de 1 à 99 % en poids dans le cas des polymères réticulés, l'agent de matage étant ajouté au polymère de matrice à raison de 1 à 50 % en poids, par rapport au poids total de la masse de polymère (polymère de matrice + polymère de matage), pour la transformation thermoplastique.
